# EUROPEAN PATENT SPECIFICATION

(11) **EP 1 488 296 B1**
(45) Date of publication and mention of the grant of the patent: **26.04.2006**
(21) Application number: 03745317.2
(22) Date of filing: 28.01.2003
(51) Int. Cl.: G05D 1/02, A01D 34/00, B60K 31/00

(54) **ENVIRONMENTALLY RESPONSIVE AUTONOMOUS GROUND MAINTENANCE EQUIPMENT**
AUTONOMES GERÄT ZUR PFLEGE VON BODENFLÄCHEN IN ABHÄNGIGKEIT VON UMGEBUNGSBEDINGUNGEN
EQUIPEMENT AUTONOME D'ENTRETIEN DU SOL ADAPTE AUX CONDITIONS AMBIANTES

(30) Priority: 26.03.2002 GB 0207109
(43) Date of publication of application: 22.12.2004
(73) Proprietor: McMurtry Ltd, Dursley, Gloucestershire GL11 5AT (GB)
(72) Inventor: MCMURTRY, Richard, Bristol BS6 6UH (GB); MCMURTRY, Ben, Horsley, Gloucestershire GL6 0PF (GB)
(74) Representative: Cheyne, John Robert Alexander M.
(86) International application number: PCT/GB2003/000359
(87) International publication number: WO 2003/083593

(56) References cited:
- EP-A- 0 382 693
- DE-U- 29 823 263
- GB-A- 2 358 843
- US-A- 5 325 650
- US-A- 5 444 965

## Description

### FIELD OF THE INVENTION

This invention relates to autonomous ground maintenance equipment capable of changing its performance for varying weather and turf conditions.

### BACKGROUND TO THE INVENTION

When maintaining a sizable turfed area such as a golf course or sports field, for example a soccer, rugby or cricket pitch, large manual equipment is generally used. This equipment may be machines such as lawn mowers, hollows corers, slitters or top dressers which may be either "ride on" or "walk behind" but are conventionally self powered. The nature of the maintenance usually requires the machines to perform a great deal of turning so as to achieve adequate ground coverage. The condition of the ground to be maintained is variable, depending on the weather conditions. Maintenance regimes are carried out in all weather conditions, and the machines have an impact on the condition of the ground as the vehicle moves. In wet weather the vehicle may leave tracks, accelerate or decelerate too quickly leaving skid marks, and the tyres or roller may dig into the ground whilst the vehicle is turning, whereas in dry weather the impact is considerably less. The angle of the ground being travelled over also has a bearing on the movement of the vehicle, and performance on slopes varies depending on weather conditions.

In the related art of autonomous lawn mowers and ground maintenance vehicles, many machines exist that perform ground coverage operations which operate in the same mode of operation in all weather conditions. There are some machines that detect rain or humidity (U.S. Pat. Nos. 4919224, 5444965 and 6009358) but only react to the resulting signal by ceasing operators and/or returning to a home base. Thus the maintenance operation has to wait until the weather improves.

### SUMMARY OF THE INVENTION

According to the present invention there is provided autonomous ground maintenance equipment comprising a vehicle for performing a ground maintenance operation, and control means for controlling at least one operating parameter of the vehicle, the control means having input means for receiving data relating to environmental conditions whereby the operating parameter or at least one of the operating parameters is variable by the control means so as to modify operation of the vehicle during a ground maintenance operation in response to the environmental conditions.

In an embodiment in accordance with the present invention there is provided a vehicle that varies its performance parameters, such as rate of acceleration and deceleration, rate of change of direction, velocity and rate of change of steering angle according to weather conditions.

The vehicle may also be used to perform other ground maintenance tasks (regimes) such as slitting, hollow coring and aeration. Thus in the preferred embodiment of the present invention the vehicle may be capable of mowing grass, and is provided with a mower unit and a receptacle for storing mown grass. It may also be capable of discerning its position anywhere within a set working environment.

Depending on the positional navigation sensor employed, the area to be maintained must have at least 2 or 3 fixed known reference points. The reference points may cover, either optically or through radio transmission, the entire area in which the robot vehicle is to operate in order that the maintenance/mower vehicle may calculate its position within the environment. The area may be any grass covered sports pitch, any sports pitch requiring any ground covering maintenance, golf courses, or any area where ground covering tasks are required and weather induced damage can be done by the moving vehicle.

The travel of the machine to perform work in each area may be divided into working strokes and manoeuvres, manoeuvres being the route travelled to reach the next working stroke. A working stroke may be defined by its start position and heading, its end position and heading, and the width of the mowing/rolling or maintenance unit with which the machine may be working. A working stroke may be a straight line of travel, a circle or any other curve. The manoeuvres between working strokes may be calculated by computational means so that the machine can move between the end of one working stroke and the beginning of the next. If the work performed during the cutting or rolling regime is merely required to cover the area then the working strokes may be offset by a distance equal to or less than the width of the actuator and parallel to each other, with each stroke having an opposite heading to the adjacent stroke. If however the work to be performed during the cutting or rolling regimes is to provide a visual pattern, the visual appearance of the pattern on the grass may be made up of stripes that are wider than the working width of the machine actuator. If for example the working width of the actuator is 1 metre and the desired width of the stripes cut or rolled into the grass is 4 metres, the machine will have to travel 4 working strokes in the same direction each offset by 1 metre from each other.

The operating parameter may be one of a plurality of operating parameters that can be varied by the control means, or by an operator or programmer, depending on the operation to be carried out or the weather and ground conditions at the time. The operating vehicle parameters may be broken down into those associated with the performance of the vehicle and those associated with the regime to be performed. The parameters associated with the performance of the vehicle may be the maximum rate of acceleration and the maximum rate of deceleration which may apply to movements during a manoeuvre, or the movements at the beginning and end of a stroke or path along which the vehicle performs a ground maintenance task. Other parameters may be the maximum rate of change of steering angle, maximum rate of change of direction, the maximum steering angle allowed during a manoeuvre, or the maximum velocity at which a turn may be executed. Preferably, these parameters will limit the amount of damage done to the turf under wet conditions, and may have several settings which may relate to the amount of rain and/or moisture or water in the ground. The parameters associated with the regime may include the length of the stroke or path. If a regime is chosen where the strokes drop below a certain length whereby the amount of manoeuvring required to carry out alternate strokes is high in a small area and might affect the overall condition of the turf, the strokes may be removed from the regime. This will then eliminate the manoeuvring for those strokes and therefore prevent damage to the turf. The stroke length elimination value may have various settings depending on the amount of rain and/or moisture or water in the ground.

All of the above parameters may be altered by the operator prior to the regime commencing via a vehicle user interface or during the regime via the use of a rain or moisture sensor. An inclinometer may be used in conjunction with the sensors or the operator may take into account the gradients of the area to be maintained. The parameters may be altered individually by the operator or they may be a set of values which relate to a scale of weather conditions and/or the gradients encountered. The sensors may be mounted on the maintenance vehicle or they may be separate. If separate, a radio system may be used to transmit data from the sensor to the vehicle. The sensors may be calibrated to provide a range of different values for each parameter related to the reading taken by said sensor (a scale of settings). For example if the sensors include a rain and a moisture sensor and they do not detect rain or moisture, then the vehicle may perform tight turns, accelerate and decelerate quickly and perform short strokes without causing any damage. Towards the other end of the scale when heavy rain or moisture is detected, the vehicle may then use a large turning circle, travel slowly, accelerate and decelerate slowly, and increase the minimum stroke length thereby minimising turf damage. If the rain or moisture becomes too much then the regime may be aborted or postponed. The vehicle may also be able to access the world wide web to obtain local weather reports or forecasts and then may be able to adjust any of the previously mentioned parameters to suit the conditions.

Thus the present invention enables an autonomous ground maintenance vehicle to vary its performance according to weather conditions to limit vehicle damage to turf.

### BRIEF DESCRIPTION OF THE DRAWINGS

For a better understanding of the present invention and to show how it may be carried into effect, reference will now be made by way of example to the accompanying drawings, in which:-
Figure 1 is a side view of an autonomous grass/lawn mower showing a rain and moisture sensor.
Figure 2 is a graphical representation of a half of a soccer field showing the difference in routes travelled under different weather conditions.
Figure 3 is a graphical representation of a half soccer field with alternative routes between strokes under different weather conditions.
Figure 4 is a graphical representation of half a soccer field illustrating different stroke lengths and minimum stroke lengths that may occur during different regimes.

### DESCRIPTION OF PREFERRED EMBODIMENTS

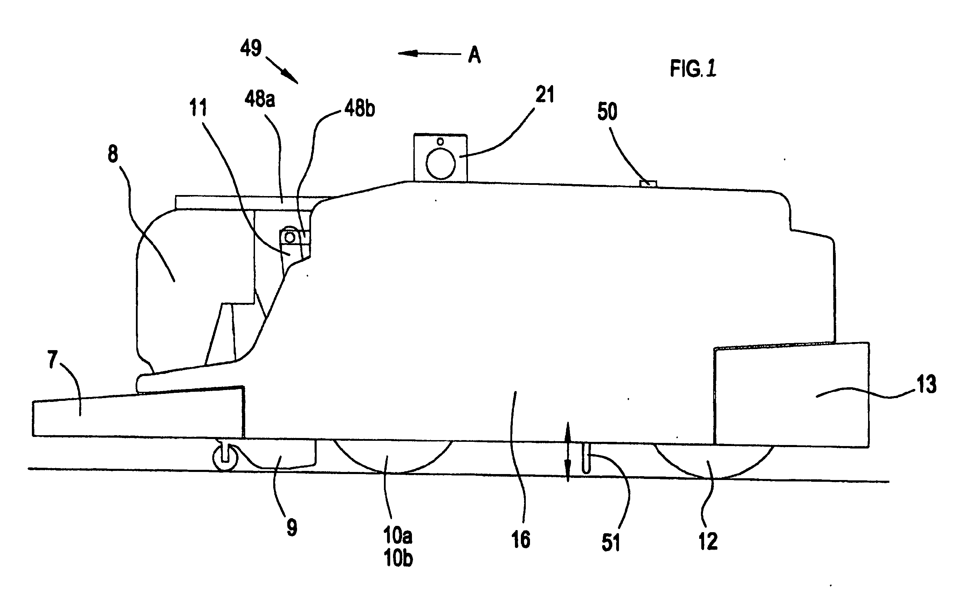

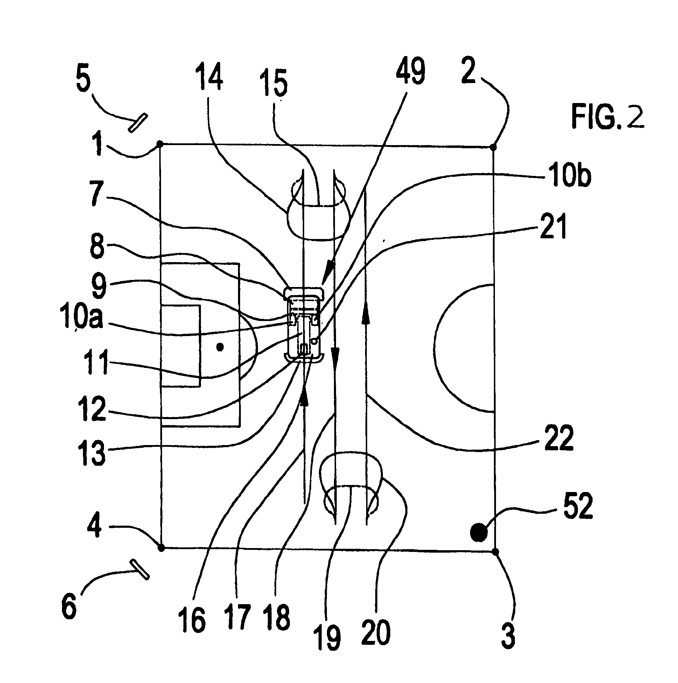

Figure 1 shows a side view of an autonomous vehicle 49 having 3 ground engaging wheels 10a,10b,12 mounted on a chassis 11 supporting a cowling 16 with a front bumper 7 and rear bumper 13. The chassis 11 also supports a grass cutting unit 9 and a grass catcher 8. A rain sensor 50 and a soil moisture sensor 51 are mounted on the vehicle. The soil moisture sensor 51 is capable of lowering to the soil and raising itself again. A laser scanner 21 is provided, which is used to determine the location of the vehicle using fixed known reflectors 5, 6 (Figure 2) so as to allow the vehicle to navigate around the soccer pitch.

In Figure 2 the autonomous vehicle 49 is located on half a soccer pitch defined by points 1,2,3,4. Part of a regime travelled by the vehicle 49 is illustrated. This regime may for example, comprise a mowing operation. The vehicle 49 travels back and forth on strokes 17,18,22 and performs manoeuvres 14 or 15 and 19 or 20 depending on the weather conditions. The manoeuvres in this case are full vehicle reversing moves to allow the vehicle 49 to reach the next stroke. If the weather is dry then the vehicle 49 will follow the lines 15 and 19 whereby a small radius of curvature is used. The maximum acceleration and deceleration will be set at a high level, as well as the maximum velocity. If the weather is wet the vehicle will follow the paths represented by 14 and 20 whereby the maximum radius of curvature is increased, the maximum acceleration and deceleration value are decreased and the maximum velocity is reduced to prevent damage to the turf. Depending on the weather conditions the route taken for a manoeuvre may be anywhere in the range between the two paths 14 and 15, and 19 and 20. The moisture content of the soil may be measured by the on-board sensor 21, or by a soil moisture sensor 52 which is situated at an edge of the pitch and transmits a moisture value to the vehicle 49 allowing it to vary the performance parameters (acceleration, deceleration, velocity, radius of curvature and minimum stroke length) accordingly.

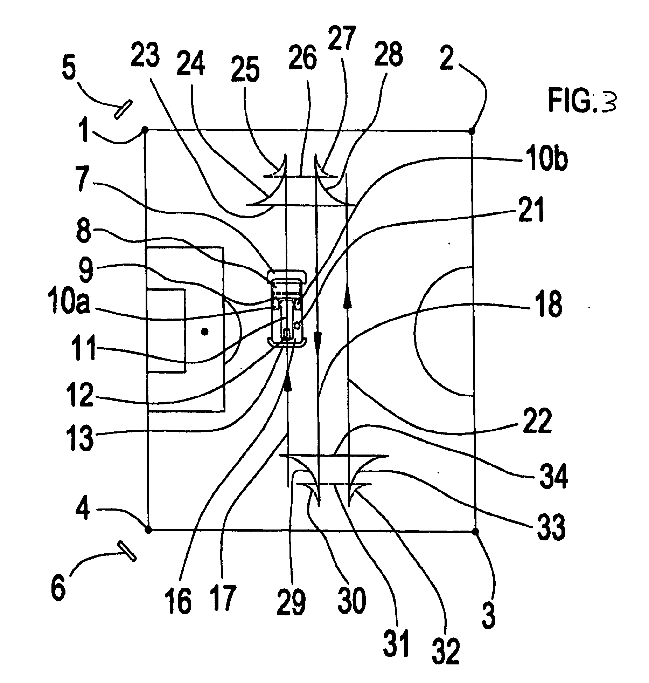

Figure 3 shows the same plan view as FIG.2, but with a different set of manoeuvres. The manoeuvres are made up of a reverse move 25 or 24 followed by a forward move 26 or 23 and then finally a reverse move 27 or 28 to allow the vehicle 49 to reach the next stroke 18. Manoeuvres 25,26,27 (and corresponding manoeuvres 30,31,32 at the other end of the working strokes) will be used when the weather is dry and manoeuvres 24,23,28 and 29,34,33 will be used when the weather is wet, thus reducing damage to the turf.

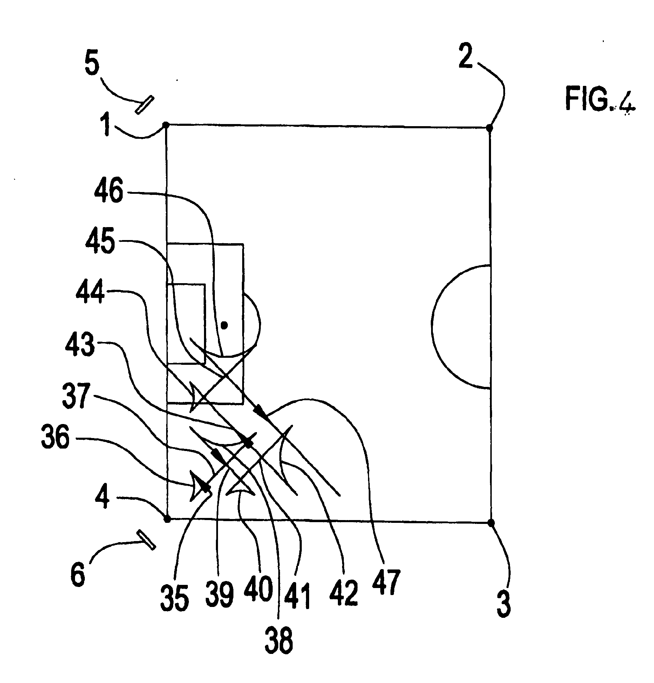

Figure 4 shows the same plan view of half a soccer pitch as Figure 2 and Figure 3 but with a partial alternative regime whereby the strokes are angled relative to the pitch. The strokes 35,39,43,47 therefore differ in length. The autonomous vehicle carrying out the regime will perform manoeuvres 36,37,38,40,41,42,44,45,46 in a small area and may damage the turf if the ground is wet. The autonomous vehicle will therefore only carry out all strokes 35,39,43,47 if the weather is dry, and miss out strokes 35,39,43 by increasing the minimum stroke length if the weather is wet. The minimum stroke length will vary depending on the weather or water content of the turf.

The vehicle may also be responsive to the slope of the ground, for example when working on a golf course or other amenity area having a gradient. Thus, the operating parameters will be varied to avoid ground damage, or slippage of the vehicle, when working on a slope. If the ground is wet, regions having a gradient greater than a predetermined amount may be entirely avoided.

## Claims

1. Autonomous ground maintenance equipment comprising a vehicle (49) for performing a ground maintenance operation, and control means for controlling, at least one operating parameter of the vehicle (49), **characterised in that**, the control means have input means (50,51) for receiving data relating to one or more of the environmental conditions rain, soil moisture and slope whereby the operating parameter or at least one of the operating parameters is variable by the control means so as to modify operation of the vehicle (49) during a ground maintenance operation in response to the environmental conditions.

2. Autonomous ground maintenance equipment according to claim 1, wherein the operating parameter or one of the operating parameters comprises a maximum permitted acceleration value for the equipment.

3. Autonomous ground maintenance equipment according to claim 1 or 2, wherein the operating parameter or at least one of the operating parameters comprises a maximum permitted deceleration value for the equipment.

4. Autonomous ground maintenance equipment as claimed in any one of the preceding claims, wherein the operating parameter or at least one of the operating parameters comprises a maximum permitted rate of change of direction for the equipment.

5. Autonomous ground maintenance equipment as claimed in any one of the preceding claims, wherein the operating parameter or at least one of the operating parameters comprises a maximum permitted rate of change of steering angle for the equipment.

6. Autonomous ground maintenance equipment as claimed in any one of the preceding claims, wherein the operating parameter or at least one of the operating parameters comprises a maximum permitted velocity for the equipment.

7. Autonomous ground maintenance equipment as claimed in any one of the preceding claims, wherein guidance means (21) is provided for guiding the vehicle (49) so as to perform a ground maintenance task along at least one specified path, wherein the operating parameter or at least one of the operating parameters comprises a minimum allowable specified path length.

8. Autonomous ground maintenance equipment as claimed in any one of the preceding claims, wherein the input means (50,51) receives data from at least one sensor.

9. Autonomous ground maintenance equipment as claimed in claim 8, wherein the sensor, or one of the sensors, is a rain sensor (50).

10. Autonomous ground maintenance equipment as claimed in claim 8 or 9, wherein the sensor, or one of the sensors, is a soil moisture sensor (51).

11. Autonomous ground maintenance equipment as claimed in any one of claims 8 to 10, wherein the sensor, or one of the sensors, is an inclinometer.

12. Autonomous ground maintenance equipment as claimed in any one of claims 8 to 11, wherein the sensor, or at least one of the sensors, is mounted on the vehicle (49).

13. Autonomous ground maintenance equipment as claimed in any one of claims 1 to 8, wherein the sensor is separate from the vehicle (49).

14. Autonomous ground maintenance equipment as claimed in any one of the preceding claims, wherein the input means (50,51) is adapted to receive the data representing the environmental conditions by manual input by an operator.

15. Autonomous ground maintenance equipment as claimed in any one of the preceding claims, wherein the input means (50,51) is adapted to receive data relating to environmental conditions from the Internet.

16. Autonomous ground maintenance equipment as claimed in any one of the preceding claims, which is an autonomous turf maintenance vehicle.

17. Autonomous ground maintenance equipment as claimed in claim 16, wherein said turf maintenance vehicle is provided with a mower unit (9) and a receptacle (8) for temporarily storing mown grass.

## Revendications

1. Equipement autonome d'entretien du sol comprenant un véhicule (49) pour effectuer une opération d'entretien du sol et des moyens de commande pour commander au moins un paramètre de fonctionnement du véhicule, **caractérisé en ce que** les moyens de commande comportent des moyens d'entrée (50, 51) pour recevoir des données relatives à une ou plusieurs des conditions ambiantes pluie, humidité du sol et inclinaison, grâce à quoi le paramètre de fonctionnement ou au moins l'un des paramètres de fonctionnement est variable par les moyens de commande, de façon à modifier le fonctionnement du véhicule (49) durant une opération d'entretien du sol en réponse aux conditions ambiantes.

2. Equipement autonome d'entretien du sol selon la revendication 1, dans lequel le paramètre de fonctionnement ou l'un des paramètres de fonctionnement comprend une valeur maximale permise d'accélération de l'équipement.

3. Equipement autonome d'entretien du sol selon la revendication 1 ou 2, dans lequel le paramètre de fonctionnement ou au moins l'un des paramètres de fonctionnement comprend une valeur maximale permise de décélération de l'équipement.

4. Equipement autonome d'entretien du sol selon l'une quelconque des revendications précédentes, dans lequel le paramètre de fonctionnement ou au moins l'un des paramètres de fonctionnement comprend un taux maximal permis de changement de direction de l'équipement.

5. Equipement autonome d'entretien du sol selon l'une quelconque des revendications précédentes, dans lequel le paramètre de fonctionnement ou au moins l'un des paramètres de fonctionnement comprend un taux maximal permis de changement d'angle de braquage de l'équipement.

6. Equipement autonome d'entretien du sol selon l'une quelconque des revendications précédentes, dans lequel le paramètre de fonctionnement ou au moins l'un des paramètres de fonctionnement comprend une vitesse maximale permise de l'équipement.

7. Equipement autonome d'entretien du sol selon l'une quelconque des revendications précédentes, dans lequel un moyen de guidage (21) est prévu pour guider le véhicule (49) de façon à effectuer une tâche d'entretien du sol le long d'au moins un trajet spécifié, dans lequel le paramètre de fonctionnement ou au moins l'un des paramètres de fonctionnement comprend une longueur minimale permise de trajet spécifié.

8. Equipement autonome d'entretien du sol selon l'une quelconque des revendications précédentes, dans lequel le moyen d'entrée (50, 51) reçoit des données d'au moins un détecteur.

9. Equipement autonome d'entretien du sol selon la revendication 8, dans lequel le détecteur ou l'un des détecteurs est un détecteur de pluie (50).

10. Equipement autonome d'entretien du sol selon la revendication 8 ou 9, dans lequel le détecteur ou l'un des détecteurs est un détecteur d'humidité du sol (51).

11. Equipement autonome d'entretien du sol selon l'une quelconque des revendications 8 à 10, dans lequel le détecteur ou l'un des détecteurs est un inclinomètre.

12. Equipement autonome d'entretien du sol selon l'une quelconque des revendications 8 à 11, dans lequel le détecteur ou l'un des détecteurs est monté sur le véhicule (49).

13. Equipement autonome d'entretien du sol selon l'une quelconque des revendications 1 à 8, dans lequel le détecteur est séparé du véhicule (49).

14. Equipement autonome d'entretien du sol selon l'une quelconque des revendications précédentes, dans lequel le moyen d'entrée (50, 51) est adapté pour recevoir des données représentant les conditions ambiantes par entrée manuelle par un opérateur.

15. Equipement autonome d'entretien du sol selon l'une quelconque des revendications précédentes, dans lequel le moyen d'entrée (50, 51) est adapté pour recevoir des données relatives aux conditions ambiantes par Internet.

16. Equipement autonome d'entretien du sol selon l'une quelconque des revendications précédentes, qui est un véhicule autonome d'entretien du gazon.

17. Equipement autonome d'entretien du sol selon la revendication 16, dans lequel ledit véhicule d'entretien du gazon est muni d'une tondeuse (9) et d'un collecteur (8) pour stocker temporairement le gazon tondu.

## Patentansprüche

1. Autonomes Gerät zur Pflege von Bodenflächen, umfassend ein Fahrzeug (49), um eine Pflegemaßnahme von Bodenflächen durchzuführen und Kontrolleinrichtungen, zur Kontrolle mindestens eines Betriebsparameters des Fahrzeugs (49), **dadurch gekennzeichnet, dass** die Kontrolleinrichtung Eingabeeinrichtungen (50,51) aufweist, um Daten zu empfangen, die mit einer oder mehreren der Umweltbedingungen Regen, Bodenfeuchtigkeit und Neigung in Zusammenhang stehen, wobei die Betriebsparameter oder zumindest einer der Betriebsparameter durch die Kontrolleinrichtung veränderbar ist, um den Betrieb eines Fahrzeugs (49) während einer Pflegemaßnahme von Bodenflächen entsprechend den Umweltbedingungen anzupassen.

2. Autonomes Gerät zur Pflege von Bodenflächen gemäß Anspruch 1, bei dem die Betriebsparameter oder einer der Betriebsparameter einen maximal zulässigen Beschleunigungswert für das Gerät umfasst.

3. Autonomes Gerät zur Pflege von Bodenflächen gemäß Anspruch 1 oder 2, bei dem die Betriebsparameter oder zumindest einer der Betriebsparameter einen maximal zulässigen Verzögerungswert für das Gerät umfasst.

4. Autonomes Gerät zur Pflege von Bodenflächen wie in einem der vorhergehenden Ansprüche beansprucht, bei dem die Betriebsparameter oder zumindest einer der Betriebsparameter ein maximal zulässiges Maß für Richtungsänderungen für das Gerät umfasst.

5. Autonomes Gerät zur Pflege von Bodenflächen wie in einem der vorhergehenden Ansprüche beansprucht, bei dem die Betriebsparameter oder zumindest einer der Betriebsparameter ein maximal zulässiges Maß für Änderungen des Lenkwinkels für das Gerät umfasst.

6. Autonomes Gerät zur Pflege von Bodenflächen wie in einem der vorhergehenden Ansprüche beansprucht, bei dem die Betriebsparameter oder zumindest einer der Betriebsparameter eine maximal zulässige Geschwindigkeit für das Gerät umfasst.

7. Autonomes Gerät zur Pflege von Bodenflächen wie in einem der vorhergehenden Ansprüche beansprucht, bei dem eine Führungseinrichtung (21) zur Führung des Fahrzeugs (49) vorgesehen ist, um eine Pflegeaufgabe von Bodenflächen entlang zumindest eines vorgegebenen Wegs durchzuführen, bei dem die Betriebsparameter oder zumindest einer der Betriebsparameter eine minimal zulässige vorgegebene Weglänge umfasst.

8. Autonomes Gerät zur Pflege von Bodenflächen wie in einem der vorhergehenden Ansprüche beansprucht, bei dem die Eingabeeinrichtungen (50,51) Daten von zumindest einem Sensor empfangen.

9. Autonomes Gerät zur Pflege von Bodenflächen wie in Anspruch 8 beansprucht, bei dem der Sensor, oder einer der Sensoren, ein Regensensor (50) ist.

10. Autonomes Gerät zur Pflege von Bodenflächen wie in Anspruch 8 oder 9 beansprucht, bei dem der Sensor, oder einer der Sensoren, ein Bodenfeuchtigkeitssensor (51) ist.

11. Autonomes Gerät zur Pflege von Bodenflächen wie in einem der Ansprüche 8 bis 10 beansprucht, bei dem der Sensor, oder einer der Sensoren, ein Neigungsmesser ist.

12. Autonomes Gerät zur Pflege von Bodenflächen wie in einem der Ansprüche 8 bis 11 beansprucht, bei dem der Sensor, oder mindestens einer der Sensoren, am Fahrzeug (49) montiert ist.

13. Autonomes Gerät zur Pflege von Bodenflächen wie in einem der Ansprüche 1 bis 8 beansprucht, bei dem der Sensor getrennt vom Fahrzeug (49) ist.

14. Autonomes Gerät zur Pflege von Bodenflächen wie in einem der vorhergehenden Ansprüche beansprucht, bei dem die Eingabeeinrichtungen (50,51) angepasst sind, Daten, welche die Umweltbedingungen darstellen, durch manuelle Eingabe durch einen Anwender zu empfangen.

15. Autonomes Gerät zur Pflege von Bodenflächen wie in einem der vorhergehenden Ansprüche beansprucht, bei dem die Eingabeeinrichtungen (50,51) angepasst sind, Daten, die mit den Umweltbedingungen zusammenhängen, vom Internet zu empfangen.

16. Autonomes Gerät zur Pflege von Bodenflächen wie in einem der vorhergehenden Ansprüche beansprucht, welches ein autonomes Fahrzeug zur Rasenpflege ist.

17. Autonomes Gerät zur Pflege von Bodenflächen wie in Anspruch 16 beansprucht, bei dem das Fahrzeug zur Rasenpflege mit einer Mäheinrichtung (9) und einem Behälter (8) zur vorübergehenden Lagerung gemähten Grases ausgestattet ist.
